# EUROPÄISCHE PATENTSCHRIFT

(11) **EP 1 985 896 B1**
(45) Veröffentlichungstag und Bekanntmachung des Hinweises auf die Patenterteilung: **12.12.2012**
(21) Anmeldenummer: 07008321.7
(22) Anmeldetag: 24.04.2007
(51) Int. Cl.: F16J 15/08

(54) **Metallische Flachdichtung**
Metal flat gasket
Joint plat métallique

(43) Veröffentlichungstag der Anmeldung: 29.10.2008
(73) Patentinhaber: REINZ-Dichtungs-GmbH, 89233 Neu-Ulm (DE)
(72) Erfinder: Unseld, Guenther, 89189 Neenstetten (DE); Egloff, Georg, 89264 Weissenhorn (DE); Hoehe, Kurt, 89129 Langenau (DE)
(74) Vertreter: Tomerius, Isabel

(56) Entgegenhaltungen:
- EP-A- 1 577 589
- EP-A- 1 635 093
- WO-A-95/22020
- DE-A1- 2 118 610
- DE-U1-202006 003 678

## Beschreibung

Die Erfindung betrifft eine metallische Flachdichtung mit wenigstens einer Dichtungslage, in der wenigstens eine Durchgangsöffnung vorhanden ist, die von wenigstens einem in einem Abdichtbereich angeordneten elastisch verformbaren Dichtelement umgeben und abgedichtet wird. Zusätzlich kann in wenigstens einem Funktionsbereich wenigstens ein weiteres elastisch verformbares Dichtelement vorhanden sein, das jedoch nicht um eine einzelne Durchgangsöffnung herum verläuft. Außerhalb des wenigstens einen Abdichtbereichs und gegebenenfalls des wenigstens einen Funktionsbereichs weist die Dichtung auf wenigstens einer der Oberflächen einer der Dichtungslagen einen mit einer Oberflächenstrukturierung versehenen Bereich auf. Dieser oberflächenstrukturierte Bereich besitzt eine größere Dicke als die originäre Dicke der Dichtungslage, in welcher die Oberflächenstrukturierung ausgebildet ist.

Derartige in ihrer Dicke vergrößerte Bereiche einer Dichtungslage dienen in metallischen Flachdichtungen wie insbesondere Zylinderkopfdichtungen üblicherweise als Abstützbereiche. So ist es beispielsweise aus der WO 2004/076893 A1 oder der EP 1577589 A1 bekannt, die Sicken, welche die Brennraumöffnungen der beschriebenen Zylinderkopfdichtungen abdichten, durch entlang den Brennraumöffnungen verlaufende, durch Prägen der Dichtungslage verdickte und oberflächenstrukturierte Bereich abzustützen. Zusätzlich beschreiben die genannten Druckschriften, dass auch in den von den Brennraumöffnungen entfernt, zum Außenrand der Dichtung hin gelegenen Bereichen - dem so genannten Hinterland der Dichtung - entsprechende Abstützelemente vorgesehen sein können. Diese Abstützelemente bestehen in einer wellenförmigen oder schachbrettartigen Prägung der Dichtungslage, in der Vertiefungen und Erhöhungen abwechseln. Die Hinterland-Abstützelemente dienen jedoch nicht als so genannte Stopper, welche dass vollständige Abflachen elastischer Dichtelemente verhindern sollen, sondern als lokale Höhenausgleichselemente. Bevorzugt erstrecken sich diese Höhenausgleichselemente unmittelbar am Außenrand der Dichtung entlang und hier vorzugsweise entlang der beiden Schmalseiten der Dichtungslage. Zweck der Höhenausgleichselemente ist es hauptsächlich, Verzüge in den abzudichtenden Gegenflächen und hier insbesondere innerhalb des Zylinderkopfes zu verhindern. Das gleichzeitige Vorhandensein von Abstützelementen bzw. Höhenausgleichselementen sowohl entlang der Brennraumöffnungen als auch im Hinterland der Dichtung stellt bezüglich der Verhinderung von Verzügen eine deutliche Verbesserung gegenüber solchen Dichtungen dar, in denen nur auf der Brennraumseite Abstützelemente für die die Brennraumöffnungen umgebenden Sicken vorhanden sind. Dennoch können auch in diesen Fällen Verzüge nicht immer zuverlässig und vollständig verhindert werden.

Aufgabe der Erfindung ist es entsprechend, eine metallische Flachdichtung anzugeben, welche Verzüge der abzudichtenden Gegenflächen, zwischen denen die Flachdichtung eingespannt ist, besonders zuverlässig verhindert. Die Dichtung sollte dabei einfach und kostengünstig herstellbar sein und auf eine Vielzahl möglicher abzudichtender Gegenflächen auf einfache Weise anzupassen sein.

Die Lösung dieser Aufgabe gelingt mit der metallischen Flachdichtung gemäß Anspruch 1. Bevorzugte Weiterbildungen sind in den Unteransprüchen beschrieben.

Die Erfindung betrifft also eine metallische Flachdichtung mit wenigstens einer Dichtungslage, in der wenigstens eine Durchgangsöffnung vorhanden ist. Diese Durchgangsöffnung wird von einem Abdichtbereich umgeben, in dem ein elastisch verformbares Dichtelement angeordnet ist, das die Durchgangsöffnung umschließt. Die Dichtungslage kann gegebenenfalls auch wenigstens einen Funktionsbereich aufweisen, in dem ebenfalls wenigstens ein elastisch verformbares Dicht- oder Stützelement vorhanden ist, das jedoch nicht um eine einzelne Durchgangsöffnung herum verläuft. Außerhalb des wenigstens einen Abdichtbereichs und gegebenenfalls des wenigstens einen Funktionsbereichs weist die Flachdichtung auf wenigstens einer der Oberflächen einer Dichtungslage einen mit einer Oberflächenstrukturierung versehenen Bereich auf. In diesem Bereich ist die Dicke der Dichtungslage größer als die originäre Dicke derselben. Die Oberflächenstrukturierung wird von sich abwechselnden Vertiefungen und Erhebungen gebildet, die so angeordnet sind, dass sie auf wenigstens einer Schar virtueller gerader Linien zu liegen kommen, die im Wesentlichen parallel über die Gesamtausdehnung des oberflächenstrukturierten Bereiches verlaufen. Dabei bedeckt der mit der Oberflächenstrukturierung versehene Bereich die Oberfläche der Dichtungslage, welche mit der Oberflächenstrukturierung versehen ist, außerhalb des wenigstens einen Abdichtbereichs und gegebenenfalls des wenigstens einen Funktionsbereiches im Wesentlichen vollständig.

Unter einer im Wesentlichen vollständigen Bedeckung der Oberfläche mit der Oberflächenstrukturierung soll hier verstanden werden, dass wenigstens 70 % der Oberfläche der Dichtungslage bedeckt sind, die nach Abzug der von dem wenigstens einen Abdichtbereich und gegebenenfalls dem wenigstens einen Funktionsbereich eingenommenen Fläche von der Gesamtoberfläche der Dichtungslage verbleibt. Dabei soll unter der Fläche des Abdichtbereiches diejenige Fläche verstanden werden, die sich von der Durchgangsöffnung bis zu dem von der Durchgangsöffnung abgelegenen Außenrand des die Durchgangsöffnung umgebenden Dichtelements erstreckt. Handelt es sich bei dem die Durchgangsöffnung umgebenden Dichtelement beispielsweise um eine in die Dichtungslage eingeformte Sicke, wird unter dem Abdichtbereich die ringförmige Fläche verstanden, die sich vom Außenrand der Durchgangsöffnung bis zum äußeren Sickenfuß der Sicke erstreckt. Die Fläche des Funktionsbereichs entspricht dagegen der von dem dort angeordneten elastisch verformbaren Dicht- oder Stützelement eingenommenen Fläche. Im Falle einer Halb- oder Vollsicke wäre dies also der Bereich, der sich zwischen den beiden Sickenfüßen über die Gesamtlänge der Sicke erstreckt bzw. bei einer Halbsicke der Bereich ihrer Rampe. Ein Beispiel für einen Funktionsbereich ist ein Bereich, der von einer Dichtsicke eingenommen wird, die mehrere Durchgangsöffnungen gleichzeitig umgibt. Solche Konstruktionen sind bei der Abdichtung von Öl- oder Kühlwasseröffnungen von Zylinderkopfdichtungen üblich. Unter diese Variante fällt beispielsweise auch eine Voll- oder Halbsicke, die entlang des Außenrandes der Dichtungslage umläuft und mehrere Öffnungen im Inneren der Dichtungslage umgibt. Ein anderes Beispiel eines Funktionsbereichs ist ein Bereich, der von einer Sicke eingenommen wird, die nicht in sich geschlossen ist und insofern keine Dichtfunktion aufweist. Derartige gestreckte Sicken haben häufig Stützfunktion für benachbarte Bereiche der Dichtung. Anstelle der Sicken können auch Elastomerwülste als Dicht- oder Stützelemente vorhanden sein. Bevorzugt nimmt die Oberflächenstrukturierung wenigstens 80 % und besonders bevorzugt wenigstens 90 % der Oberfläche der Dichtungslage außerhalb des wenigstens einen Abdichtbereichs und gegebenenfalls des wenigstens einen Funktionsbereiches ein. Gemessen an der Gesamtausdehnung der Dichtungslage unter Berücksichtigung des wenigstens einen Abdichtbereichs und gegebenenfalls des wenigstens einen Funktionsbereichs nimmt die Oberflächenstrukturierung bevorzugt mindestens 50 %, besonders bevorzugt mindestens 60 % und insbesondere mindestens 70 % der Gesamtoberfläche der Dichtungslage ein. In allen vorstehend genannten Fällen ist in den Flächenangaben nur die tatsächlich belegbare, vorhandene Fläche gemeint. Die Bereiche, die von Durchgangsöffnungen eingenommen werden, sind also nicht berücksichtigt.

Erfindungsgemäß nimmt die Oberflächenstrukturierung also einen wesentlichen Teil der Oberfläche der Dichtungslage ein, die nicht von elastisch verformbaren Dichtelementen beansprucht wird. Bevorzugt schließt sich die Oberflächenstrukturierung unmittelbar an den wenigstens einen Abdichtbereich und, falls vorhanden, an den wenigstens einen Funktionsbereich an oder hält nur einen geringen Abstand, beispielsweise 0,3 mm bis 3 mm, bevorzugt 0,5 mm bis 2 mm, besonders bevorzugt 0,5 mm bis 1,5 mm, zu diesen ein. Sind mehrere Abdichtbereiche oder mehrere Funktionsbereiche vorhanden, reicht die Oberflächenstrukturierung zweckmäßig so nah wie möglich an alle diese Bereiche heran. So nah wie möglich bedeutet dabei, dass die Funktionsfähigkeit der elastischen Dichtelemente durch die Oberflächenstrukturierung nicht beeinträchtigt wird. Die Oberflächenstrukturierung erstreckt sich bevorzugt auch bis an die äußeren Randbereiche der Dichtungslage, es sei denn, hier sind Abdicht- oder Funktionsbereiche vorhanden.

Insgesamt ist in der erfindungsgemäßen Flachdichtung also ein Großteil wenigstens einer der Oberflächen einer Dichtungslage außerhalb der Abdicht- und Funktionsbereiche von der Oberflächenstrukturierung belegt. In diesem strukturierten Bereich besitzt die Dichtungslage eine größere Dicke als die Dicke der originären Dichtungslage, d.h., der planen Dichtungslage vor Einbringen der Oberflächenstrukturierung. Die Dicke der Dichtungslage wird dabei als Abstand zwischen zwei Tangentialebenen gemessen, die jeweils parallel zur Ebene der nicht verformten Dichtungslage verlaufen und an gegenüberliegenden Seiten an den Oberflächen der Dichtungslage anliegen. Die Dicke im oberflächenstrukturierten Bereich bemisst sich also in keinem Fall ausgehend von Vertiefungen in der Oberfläche, sondern von den dort vorhandenen Erhebungen. Weist nur eine der Oberflächen der Dichtungslage eine Oberflächenstrukturierung auf, wird der Abstand also zwischen der Ebene der unbehandelten Dichtungslage und einer Ebene gemessen, die auf der gegenüberliegenden Seite der Dichtungslage an den Erhebungen anliegt. Bei einer beidseitig oberflächenstrukturierten Dichtungslage wird der Abstand zwischen zwei Ebenen gemessen, die jeweils an den Erhebungen der entsprechenden Seite der Dichtungslage anliegen. Dabei muss die Höhe der Erhebungen nicht über den gesamten oberflächenstrukturierten Bereich gleich hoch sein. Da die Erhebungen jedoch zumindest auf einer Seite über die unbehandelte Oberfläche der Dichtungslage herausstehen, ist die Dicke der Dichtungslage im oberflächenstrukturierten Bereich in jedem Fall größer als die originäre Dicke der unbehandelten Dichtungslage. Vertiefungen sind gegenüber den Erhebungen niedrigere Bereiche, also nicht unbedingt Bereiche, die in die Ebene der unverformten Dichtungslage eingetieft sind.

Der mit der Oberflächenstrukturierung versehene Bereich auf wenigstens einer Oberfläche der Dichtungslage ergibt einen großflächig ausgelegten Stützbereich, der gegenüber lediglich lokal vorhandenen Stützbereichen eine deutlich bessere Stützwirkung entfalten kann und damit Verzügen in den abzudichtenden Gegenflächen deutlich besser entgegenwirkt. Die Höhe der Erhebungen in der Oberflächenstrukturierung kann gezielt der Topographie der abzudichtenden Gegenflächen und den zugehörigen Bauteilsteifigkeiten angepasst werden. Auf diese Weise lassen sich auch die beim Zusammenspannen der abzudichtenden Gegenflächen auf die metallische Flachdichtung einwirkenden Schraubenkräfte sehr viel gezielter einsetzen und insgesamt verringern.

Die Vertiefungen und Erhebungen, die die Oberflächenstrukturierung bilden, sind abwechselnd zueinander angeordnet und liegen auf wenigstens einer Schar im Wesentlichen parallel verlaufender gerader Linien. Diese geraden Linien verlaufen über die gesamte Ausdehnung des oberflächenstrukturierten Bereiches in der Erstreckungsrichtung der Vertiefungen durchgehend. Dies bedeutet, dass Vertiefungen und Erhebungen über die gesamte von der Oberflächenstrukturierung eingenommene Fläche sehr regelmäßig verteilt sind, was die Herstellung des oberflächenstrukturierten Bereiches sehr erleichtert. Bei der Schar im Wesentlich parallel verlaufender gerader Linien handelt es sich um virtuelle Linien. Diese Linien setzen sich zwar über die gesamte Fläche des oberflächenstrukturierten Bereiches fort, jedoch müssen nicht zwangsläufig an jeder Stelle dieser Linien auch Erhebungen oder Vertiefungen vorhanden sein. Beispielsweise können die virtuellen Linien einen Abdichtbereich oder Funktionsbereich schneiden, in denen erfindungsgemäß keine Oberflächenstrukturierung vorgesehen ist. In einem solchen Fall verlaufen Erhebung(en) und/oder Vertiefung(en) auf einer virtuellen geraden Linie bis an den Abdichtbereich heran, werden dort unterbrochen und setzen sich dann auf der gegenüberliegenden Seite des Abdichtbereiches auf derselben geraden Linie weiter fort. Die Schar im Wesentlichen parallel verlaufender gerader Linien ist also grundsätzlich über die gesamte Fläche der Dichtungslage gezogen, während die Erhebungen und Vertiefungen der Oberflächenstrukturierung diesen Linien nur in dem beschriebenen Teilbereich folgen. Die Erhebungen sind jeweils durch Vertiefungen voneinander getrennt. Unter einem im Wesentlichen parallelen Verlauf soll hier eine Abweichung von der Parallelität von maximal 5 ° und insbesondere maximal 2 ° verstanden werden.

In einer ersten Ausführungsform der erfindungsgemäßen metallischen Flachdichtung verlaufen die Erhebungen entlang nur einer Schar paralleler Linien. Dabei kann auf einer Linie nur eine Erhebung vorgesehen sein und auf einer benachbarten Linie nur eine Vertiefung, so dass die Oberflächenstrukturierung aus parallel zueinander angeordneten, linear verlaufenden Vertiefungen mit dazwischen liegenden erhöhten Rippen gebildet wird und eine wellenartige Struktur aufweist. Die Vertiefungen sind dabei bevorzugt mit gleicher Breite in gleichem Abstand zueinander angeordnet, und die Rippen sind entsprechend bevorzugt gleich breit. Es können jedoch auch unterschiedliche Abstände zwischen den Vertiefungen und unterschiedliche Vertiefungs- und Rippenbreiten gewählt werden.

Vertiefungen und Erhebungen können sich in Erstreckungsrichtung der geraden Linien auch abwechseln. Dabei sind Vertiefungen und Erhebungen auf zueinander benachbarten Linien bevorzugt jeweils versetzt zueinander angeordnet, so dass auch quer zur Erstreckungsrichtung der geraden Linien sich Erhebungen und Vertiefungen abwechseln.

In einer anderen Ausbildungsform der Erfindung sind die Vertiefungen entlang mehrerer sich schneidender Scharen virtueller gerader Linien angeordnet. Die sich schneidenden Vertiefungen ergeben zwischen ihnen angeordnete Erhebungen, die sich nicht wie bei der wellenartigen Oberflächenstrukturierung durchgängig über den gesamten oberflächenstrukturierten Bereich erstrecken, sondern nur Teilabschnitte einnehmen. Bevorzugt bilden die sich schneidenden Linien einen Winkel von 30 bis 150 °, bevorzugt 45 bis 135 °, besonders bevorzugt 80 bis 100 ° und insbesondere 90 ° zueinander. In letzterem Fall ergibt sich ein schachbrettartiges Muster der Oberflächenstrukturierung. Bevorzugt verlaufen die Erhebungen auf zwei sich schneidenden Scharen paralleler Linien. Es ist jedoch auch möglich, dass die Vertiefungen auf drei Scharen virtueller gerader Linien verlaufen, die sich bevorzugt in einem Winkel von 60 ° schneiden. In allen Fällen ergibt sich ein netzartiges Muster der Oberflächenstrukturierung.

Die Vertiefungen können auch so angeordnet sein, dass sie auf mehr als drei Scharen virtueller gerader Linien verlaufen. Entsprechend ist eine Vielzahl von Formen der Vertiefungen und der zwischen ihnen liegenden Erhöhungen möglich. Auch die Querschnittsformen der Vertiefungen und Erhöhungen können sehr variabel gestaltet werden. Beispielsweise kann der Querschnitt in einer zur Erstreckungsrichtung der zugehörigen virtuellen Linie senkrechten Richtung trapezförmig, dreieckig, gerundet oder rechteckig ausgebildet sein. Aus Gründen der leichteren Herstellbarkeit weisen zweckmäßig alle Vertiefungen den gleichen Querschnitt auf. Es können jedoch auch Kombinationen verschiedener Querschnitte gewählt werden. Auch die Tiefe der Vertiefungen (bzw. die Höhe der Erhöhungen) kann variieren. Bevorzugt werden jedoch auch hier für alle Vertiefungen gleiche Tiefen gewählt. Dabei ist unter der Tiefe der Abstand zwischen dem höchsten Punkt der benachbarten Erhebung und dem tiefsten Punkt der Vertiefung zu verstehen, gemessen in einer Richtung senkrecht zur Ebene der Dichtungslage.

Entsprechende Variationsmöglichkeiten gibt es auch für Form und Abmessung der Erhebungen im oberflächenstrukturierten Bereich. Das Querschnittsprofil der Erhebungen kann beispielsweise kuppenförmig, rechteckig, dreieckig oder trapezförmig sein. Eine bevorzugte Form einer Erhebung ist der Polyederstumpf. Während auch die Erhebungen über den gesamten oberflächenstrukturierten Bereich eine gleiche Höhe aufweisen können, ist es - wie bereits erwähnt - hier jedoch bevorzugt, dass die Erhebungen sich über die Oberflächenstrukturierungen aufweisende Fläche in ihrer Höhe unterscheiden. Die Höhe richtet sich dabei nach der Aufgabe, die die Oberflächenstrukturierung im jeweiligen Bereich erfüllen soll. Durch die höhere Dicke der Dichtungslage im oberflächenstrukturierten Bereich verglichen mit der originären Dicke der Dichtungslage eignet sich der oberflächenstrukturierte Bereich besonders zur Ausübung einer Stützfunktion für elastische Elemente und zur gezielten Einleitung der Flächenpressung, die durch Zusammenspannen der abzudichtenden Gegenflächen erzielt wird. Der oberflächenstrukturierte Bereich kann daher so ausgelegt sein, dass er als Stopper für benachbarte elastische Dichtelemente wie insbesondere Sicken oder Elastomerwülste wirkt und verhindert, dass diese im Betrieb der Dichtung übermäßig abgeflacht werden. Der oberflächenstrukturierte Bereich eignet sich auch allgemein für Kraftnebenschlussanwendungen, indem er einen Teil der Zusammenspannkräfte aufnimmt und so verhindert, dass andere Bereiche der Dichtungsfläche zu stark mit Kraft beaufschlagt werden. Durch Verwendung der Oberflächenstrukturierung lässt sich auch Material einsparen, da sich allein durch Herausformen von Material aus einer dünneren Dichtungslage eine größere Materialstärke im oberflächenstrukturierten Bereich erzeugen lässt, ohne dass dafür zusätzliches Material benötigt wird. Der oberflächenstrukturierte Bereich kann also auch als Ersatz für eine zusätzliche Blechauflage zur Materialverstärkung dienen und somit Kosten bei der Herstellung der Dichtung einsparen. Auch die durch die Oberflächenstrukturierung erzeugte Oberflächenvergrößerung hat verschiedene Vorteile wie zum Beispiel eine Verbesserung der Haftungseigenschaften auf dieser strukturierten Oberfläche. Auf diese Weise lässt sich vor allem die Haftung von Kunststoffen an der metallischen Dichtungslage verbessern. Dies gilt einerseits im Hinblick auf mögliche Beschichtungen der Dichtungslage als auch für das Anbringen von Elastomerwülsten als Dichtelemente im oberflächenstrukturierten Bereich.

Entsprechend den vorstehend beschriebenen Anwendungsmöglichkeiten oder weiteren denkbaren Anwendungen kann die Höhe der Erhebungen (Tiefe der Vertiefungen) über die Fläche der Dichtungslage, die mit der Oberflächenstrukturierung versehen ist, variiert werden. Die Höhe kann schon bei Herausarbeiten der Erhebungen aus der Dichtungslage eingestellt werden oder dadurch, dass die erzeugten Erhebungen nach ihrer Herstellung abschnittsweise oder über den gesamten oberflächenstrukturierten Bereich planiert werden. Bei der Anwendung der Oberflächenstrukturierung als Stopper für ein elastisches Dichtelement kann beispielsweise die Höhe der Erhebungen in Umfangsrichtung um die Durchgangsöffnung, die durch das elastische Element abgedichtet wird, variiert werden. Derartige Höhenvariationen für einen Stopper sind bereits grundsätzlich aus dem Stand der Technik bekannt. So ist es insbesondere für Brennraumöffnungen in Zylinderkopfdichtungen bereits beschrieben worden, dass sich die Höhe des Stoppers in Umfangsrichtung mit zunehmendem Abstand von den Schraubenöffnungen, die um die Durchgangsöffnung angeordnet sind, vergrößert. Eine solche Höhenvariation kann auch in den erfindungsgemäßen Flachdichtungen von Vorteil sein. Ebenfalls bekannt ist es, dass der Außenrand einer Dichtung nach außen aufstehen kann. Es ist bereits vorgeschlagen worden, Abstützelemente am Außenrand einer Dichtungslage vorzusehen, die verhindern, dass sich durch Bewegung des Außenrandbereichs erzeugte Hebelkräfte in das Innere der Dichtung übertragen. Häufig weisen insbesondere Zylinderkopfdichtungen eine entlang des Außenumfanges einer Dichtungslage verlaufende Sicke oder insbesondere Halbsicke auf. Als Ergänzung derselben kann erfindungsgemäß eine Oberflächenstrukturierung im Randbereich der Dichtungslage vorgesehen sein, wobei sich die Höhe der Erhebungen oftmals in Richtung auf den Außenrand hin verändert. Im Falle einer Zylinderkopfdichtung als erfindungsgemäßer metallischer Flachdichtung sind oberflächenstrukturierte Bereiche besonders zweckmäßig auch in den schmalseitigen Außenrandabschnitten vorgesehen, um die Eingangs bereits erwähnten Verzüge des Zylinderkopfes in diesem Bereich zu verhindern. Im Hinblick auf die Verhinderung von Verzügen an den abzudichtenden Gegenflächen ist die großflächige Ausbildung der oberflächenstrukturierten Bereiche von besonderem Vorteil. Durch die bereits erwähnte Möglichkeit, die Höhe der Erhebungen über den Bereich der Oberflächenstrukturierung gezielt zu variieren und an die Größe des Dichtspalts im jeweiligen Bereich anzupassen, können Verzüge weitgehend ausgeschlossen werden. Es kann über die gesamte Ausdehnung der Oberflächenstrukturierung eine an den abzudichtenden Dichtspalt angepasste Topographie gestaltet werden. Dabei sind die Gestaltungsmöglichkeiten viel größer als bei den üblichen schmalen, ringförmigen, oder überwiegend linearen Stopperbereichen.

Die erfindungsgemäß vorgesehene Oberflächenstruktur in der erfindungsgemäßen metallischen Flachdichtung wird zweckmäßig durch Prägen der Dichtungslage erzeugt. Unter einer Oberflächenstrukturierung soll im Rahmen dieser Erfindung jede Art von Materialverformung verstanden werden, die ausgehend von einer Ausgangsdichtungslage mit der bestimmten Dicke ausschließlich unter Verwendung von Material der Dichtungslage zu einer Materialverdickung im oberflächenstrukturierten Bereich führt. Oberflächenstrukturierungen können also beispielsweise durch Hochprägen oder Tiefziehen erzeugt werden, was zu in ihrem Profil trapezförmigen, dreieckigen, rechteckigen oder gerundeten Erhebungen führt, oder durch Fließpressen oder sonstiges Materialverdrängen, wobei Material aus den erzeugten Vertiefungen seitlich verdrängt wird und so die Erhebungen ergibt.

Die Erhebungen können nur zu einer Seite der Dichtungslage über deren Oberfläche vorstehen oder auch zu beiden Seiten. In letzterem Fall können die Erhebungen den Erhebungen der anderen Oberfläche entgegengesetzt angeordnet sein, oder das Oberflächenstrukturmuster kann so versetzt sein, dass Erhebungen Vertiefungen der Gegenseite gegenüber zu liegen kommen. Es können auch jeweils voneinander verschiedene Oberflächenstrukturmuster auf den beiden Seiten der Dichtungslage miteinander kombiniert werden.

Die Erfindung eignet sich nicht nur für einlagige Dichtungen, sondern auch für mehrlagige. In letzterem Fall ist es möglich, die oberflächenstrukturierten Bereiche auf einer anderen Dichtungslage vorzusehen als die elastisch verformbaren Abdichtelemente und Funktionsbereiche, in denen die Oberflächenstrukturierung ausgespart ist. Diese räumliche Trennung von oberflächenstrukturierten Bereichen und Abdicht- bzw. Funktionsbereichen wird auch bei der Verteilung dieser Strukturen auf zwei Dichtungslagen beibehalten. Konkret bedeutet dies, dass in der Dichtungslage, welche die Oberflächenstrukturierung aufweist, in den Bereichen, die einem Abdichtbereich oder Funktionsbereich der benachbarten Dichtungslage gegenüberliegen, keine Oberflächenstrukturierung vorhanden ist. Projiziert man also bei parallel zueinander angeordneten benachbarten Dichtungslagen den Abdichtbereich bzw. Funktionsbereich der ersten Dichtungslage senkrecht auf die benachbarte Dichtungslage, so bleibt dieser Projektionsbereich von der Oberflächenstrukturierung frei.

Grundsätzlich ist es auch denkbar, oberflächenstrukturierte Bereiche auf zwei benachbarte Dichtungslagen zu verteilen, so dass diese sich entweder in ihrer Fläche und/oder in ihrer Gesamthöhe ergänzen. Eine Aufsummierung der Dicken der Oberflächenstrukturierung auf zwei benachbarten Dichtungslagen kann vor allem dann sinnvoll sein, wenn eine sehr große Dickenerhöhung im oberflächenstrukturierten Bereich erzielt werden soll, das zur Materialaufdickung erforderliche Material aber nicht aus einer einzigen Dichtungslage herausgeformt werden kann. Die Art der Oberflächenstrukturierung in den verschiedenen Dichtungslagen kann dabei gleich oder verschieden voneinander sein. Bei komplementären Oberflächenstrukturen benachbarter Oberflächen ist es möglich, dass diese teilweise ineinander greifen. Es sind aber auch nicht-komplementäre oder partiellkomplementäre Oberflächenstrukturen bei benachbarten Oberflächen einsetzbar.

Die Erfindung kann auf verschiedenste ein- oder mehrlagige metallische Flachdichtungen angewendet werden. Besonders bevorzugt sind Zylinderkopfdichtungen, Abgaskrümmerdichtungen oder auch Flanschdichtungen. Der Begriff Flachdichtung schließt ausdrücklich auch solche dreidimensional verformten Dichtungen ein, die aus einem zweidimensionalen Körper verformt wurden, so z.B. konische Dichtungen.

Die Erfindung soll nachfolgend am Beispiel einer Zylinderkopfdichtung unter Bezug auf eine Zeichnung näher erläutert werden. Die gezeigten Beispiele sind jedoch lediglich zur Erläuterung gedacht; die Erfindung ist nicht auf sie beschränkt. In den Figuren, in denen gleiche Teile mit gleichen Bezugszeichen bezeichnet sind, zeigen schematisch:
- Figur 1: eine Teildraufsicht auf eine erfindungsgemäße Zylinderkopfdichtung;
- Figuren 2 und 3: Schnittdarstellungen entlang der Linie A-A in Figur 1 mit Beispielen unterschiedlich gestalteter Oberflächenstrukturierungen;
- Figuren 4 bis 12: Schnittdarstellungen entlang der Linie B - B in Fig. 1;
- Figur 13: eine Schnittdarstellung entlang der Linie C -C in Fig. 16;
- Figur 14: eine Schnittdarstellung eines Prägewerkzeugs zur Herstellung einer erfindungsgemäßen Flachdichtung und
- Figuren 15 und 16: Draufsichten auf erfindungsgemäße Zylinderkopfdichtungen als Beispiele erfindungsgemäßer Flachdichtungen.

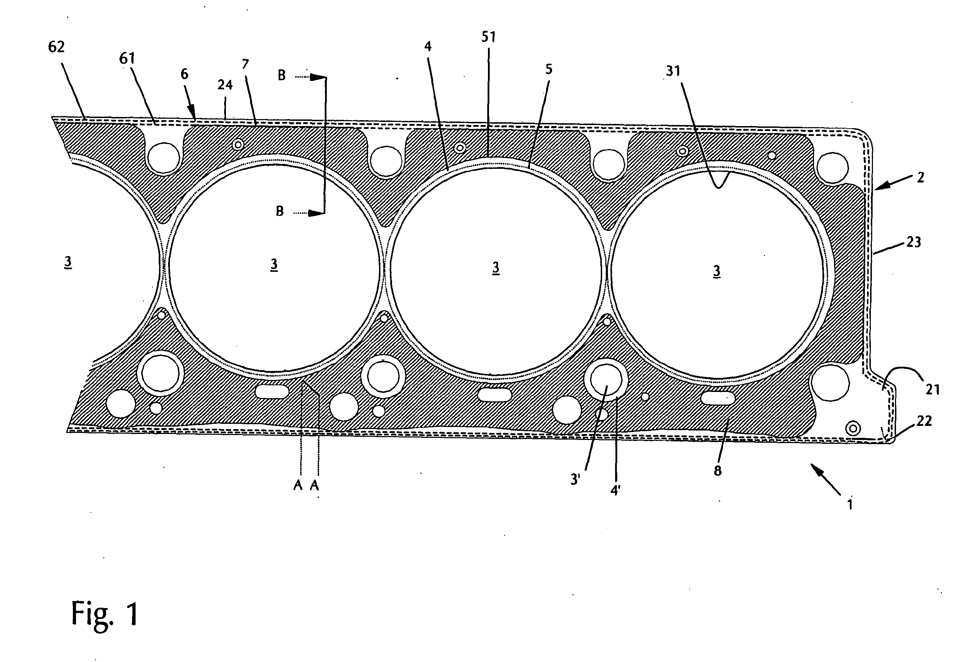

Figur 1 zeigt eine Teildraufsicht auf eine erfindungsgemäße Zylinderkopfdichtung 1 mit einer einzigen metallischen Dichtungslage 2. In dieser Dichtungslage sind vier Brennraumöffnungen 3 vorhanden, von denen die linke nur teilweise gezeigt ist. Die Brennraumöffnungen 3 sind jeweils von einem ringförmigen Abdichtbereich 4 umgeben, in dem eine kreisförmige Sicke 5 verläuft. Die gepunkteten Linien zeigen jeweils den Verlauf der Scheitelpunkte der Sicken an. Im Bereich zwischen den benachbarten Brennraumöffnungen 3 laufen die Sicken 5 jeweils zu einem gemeinsamen Sickenabschnitt zusammen. Die Abdichtbereiche 4 ergeben insgesamt eine in etwa brillenartige Form und erstrecken sich vom Rand 31 der Brennraumöffnungen bis zu den äußeren Sickenfüßen, deren Lage mit der Linie 51 bezeichnet ist.

Im so genannten Hinterland der Dichtungslage 2 - dem Bereich zwischen den Sickenfüßen 51 und dem äußeren Dichtungsrand 23 - sind weitere Durchgangsöffnungen in Form von Schraubenöffnungen, Wasser- und Ölöffnungen vorhanden, die hier nicht alle im Einzelnen bezeichnet sind. Um einige der Durchgangsöffnungen 3' sind ebenfalls Abdichtbereiche 4' vorhanden, in denen ein elastisch verformbares Dichtelement in Form einer hier nicht näher dargestellten Sicke oder einer Elastomerwulst vorhanden sind. Neben den Abdichtbereichen 4 weist die Dichtung 1 auch einen Funktionsbereich 6 auf, der entlang des Außenrandes 23 der Dichtungslage 2 verläuft und in dem in an sich bekannter Weise eine nicht im Einzelnen dargestellte, zum Außenrand 23 der Dichtungslage 2 hin aufstehende Halbsicke 7 umläuft. Der Abdichtbereich 6 verläuft streifenartig entlang des Dichtungsrandes 23 zwischen innerem und äußerem Fuß der Halbsicke 7. Der Bereich ist durch die gestrichelten Linien 61 und 62 gekennzeichnet. Der Funktionsbereich verläuft nicht unmittelbar am Außenrand 23 der Dichtung, sondern in einem Abstand zu diesem. Zwischen Außenrand 23 und äußerem Sickenfuß (gestrichelte Linie 62) befindet sich ein gerader Abschnitt 24. Dieser Abschnitt 24 und die innerhalb der benachbart zum Außenrand 23 verlaufenden gestrichelten Linie 61 befindlichen Bereiche gehören nicht mehr zum Funktionsbereich 6.

Erfindungsgemäß ist außerhalb der Abdichtbereiche 4, 4' und des Funktionsbereiches 6 auf den Oberflächen 21 und 22 der Dichtungslage 2 ein Bereich 8 vorhanden, der mit einer Oberflächenstrukturierung versehen ist. Diese Oberflächenstrukturierung ist in Figur 1 durch die Schraffur angegeben. Wie in Figur 1 erkennbar, erstreckt sich der oberflächenstrukturierte Bereich 8 großflächig über das so genannte Hinterland der Dichtungslage und bedeckt diese Fläche im Wesentlichen vollständig. Dies bedeutet, dass mehr als 70 %, bevorzugt mehr als 80 % und insbesondere mehr als 90 % der Fläche der Dichtungslage 2, abzüglich der Abdichtbereiche 4, 4' und des Funktionsbereiches 6, mit einer Oberflächenstrukturierung versehen sind. Die Oberflächenstrukturierung 8 ist in gleicher Weise wie auf der Oberfläche 21 auch auf der rückwärtigen Oberfläche 22 vorhanden. Bezogen auf die Gesamtausdehnung der Dichtungslage ohne Abzug der Abdicht- und Funktionsbereiche sind zweckmäßig mindestens 50 %, insbesondere mindestens 60 % und bevorzugt mindestens 70 % der Oberfläche der Dichtungslage von der Oberflächenstrukturierung belegt.

Der Verlauf der Strukturen von unten links nach oben rechts verdeutlicht auch den Verlauf der Erhebungen 9 und Vertiefungen 10 entlang des Bereiches 8. Die Vertiefungen 9 verlaufen in Form langgestreckter Nuten, die Erhebungen 10 in Form langgestreckter Rippen quer über den gesamten strukturierten Bereich 8 und werden dabei lediglich von den Durchgangsöffnungen und den sie gegebenenfalls umgebenden Abdichteinrichtungen unterbrochen.

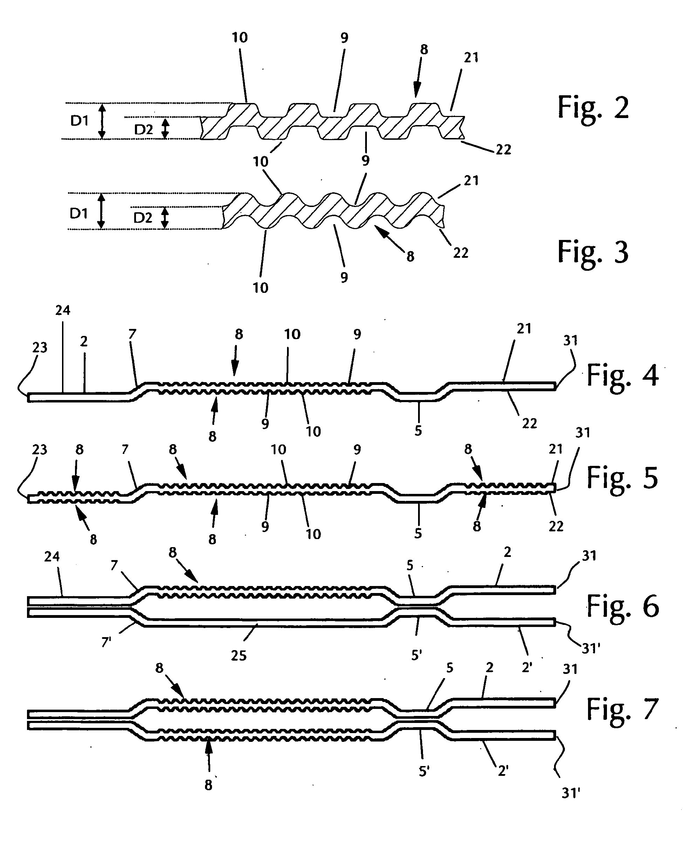

Figuren 2 und 3 zeigen zwei verschiedene Querschnittsformen der Erhebungen und Vertiefungen im oberflächenstrukturierten Bereich 8 im Querschnitt entlang der Linie A-A in Figur 1. In der Ausführungsform gemäß Figur 2 weisen sowohl die Erhebungen 10 als auch die Vertiefungen 9 einen im Wesentlichen trapezförmigen Querschnitt auf. Die Scheitelbereiche der Erhebungen 10 sind im Wesentlichen eben. In der Ausführungsform gemäß Figur 3 sind die Querschnitte der Vertiefungen 9 und Erhebungen 10 gerundet. In beiden Ausführungsformen sind die Linienstrukturen der strukturierten Bereiche so gegeneinander versetzt, dass eine Erhebung 10 auf der Oberfläche 21 eine Vertiefung 9 auf der Oberfläche 22 gegenüber zu liegen kommt. Damit ergibt sich insgesamt eine wellenförmige Struktur. Beide oberflächenstrukturierten Bereiche können durch Prägen der Dichtungslage 2 hergestellt werden. Dabei ergibt sich in den schraffierten Bereichen 8 eine größere Dicke D1 als sie die Dichtungslage vor dem Prägen aufwies. Die originäre Dicke der Dichtungslage 2 ist jeweils mit D2 bezeichnet.

Figuren 4 und 5 zeigen Querschnittsdarstellungen einer einlagigen metallischen Flachdichtung am Beispiel einer Zylinderkopfdichtung. Die Querschnitte zeigen jeweils den Bereich zwischen einer Brennraumöffnung 3, die sich jeweils am rechten Rand der Figur befindet, und dem Außenrand 23 der Dichtungslage am linken Rand der Figur. Die Brennraumöffnung 3 wird von einer Sicke 5 vollständig umgeben. Entlang des Außenrandes 23 der Dichtungslage vollständig umlaufend verläuft eine Halbsicke 7 mit einem Abstand zum Dichtungsrand 23, der von einem geraden, unstrukturierten Abschnitt 24 eingenommen wird. Zwischen der Halbsicke 7 und der Sicke 5 ist ein oberflächenstrukturierter Bereich 8 vorhanden. Er kann grundsätzlich wie in Figuren 2 oder 3 ausgebildet sein und weist einander abwechselnde Vertiefungen 9 und Erhöhungen 10 auf. Oberflächenstrukturierte Bereiche 8 sind auf beiden Seiten der Dichtungslage 2 vorhanden, nämlich auf den in den Figuren 4 und 5 nach oben weisenden Oberflächen 21 sowie auf den nach unten weisenden Oberflächen 22. In den Bereichen 8 besitzt die Dichtungslage 2 eine größere Dicke als in den anderen Bereichen. Aufgrund dieser Dickenvergrößerung wirken die oberflächenstrukturierten Bereiche 8 als Verformungsbegrenzer sowohl für die Sicke 5 als auch für die Halbsicke 7. Wegen der sehr großflächigen Auslegung der oberflächenstrukturierten Bereiche 8 über die Fläche der Dichtungslage 2 (vgl. Fig. 1) können außerdem Verzüge an den abzudichtenden Gegenflächen - also hier Motorblock und Zylinderkopf - vorteilhaft verhindert werden. Dies ist vor allem dann möglich; wenn die Höhe der Erhebungen über die Ausdehnung des oberflächenstrukturierten Bereiches 8 hinweg variiert und entsprechend der Größe des Dichtspalts zwischen Motorblock und Zylinderkopf im jeweiligen Bereich angepasst wird.

Die in Fig. 5 dargestellte Dichtung unterscheidet sich von derjenigen in Fig. 4 dadurch, dass zusätzliche oberflächenstrukturierte Bereiche 8 vorhanden sind. Diese zusätzlichen Bereiche befinden sich erneut auf beiden Oberflächen 21 und 22 der Dichtungslage, nämlich einerseits in dem Bereich zwischen der Sicke 5 und dem Rand 31 der Brennraumöffnung 3 und andererseits anstelle des unstrukturierten Abschnitts 24 in dem Bereich zwischen der Halbsicke 7 und dem Außenrand 23 der Dichtungslage.

Figuren 6 und 7 zeigen zweilagige Dichtungen, ebenfalls in einer Querschnittsdarstellung entlang der Linie B - B in Fig. 1. Die obere Dichtungslage 2 entspricht jeweils derjenigen der Dichtung gemäß Fig. 4 und muss daher hier nicht näher beschrieben werden. Spiegelbildlich zu der oberen Dichtungslage 2 ist eine weitere Dichtungslage 2' angeordnet. In Fig. 7 ist diese weitere Dichtungslage 2' das exakte Spiegelbild der ersten Dichtungslage 2. Die zweite Dichtungslage 2' in der Dichtung gemäß Fig. 6 unterscheidet sich von der zweiten Dichtungslage 2' der Dichtung in Fig. 7 dadurch, dass keine weitere Oberflächenstrukturierung 8 vorhanden ist, sondern gegenüberliegend dem oberflächenstrukturierten Bereich 8 in der ersten Dichtungslage 2 ein glatter Blechabschnitt 25.

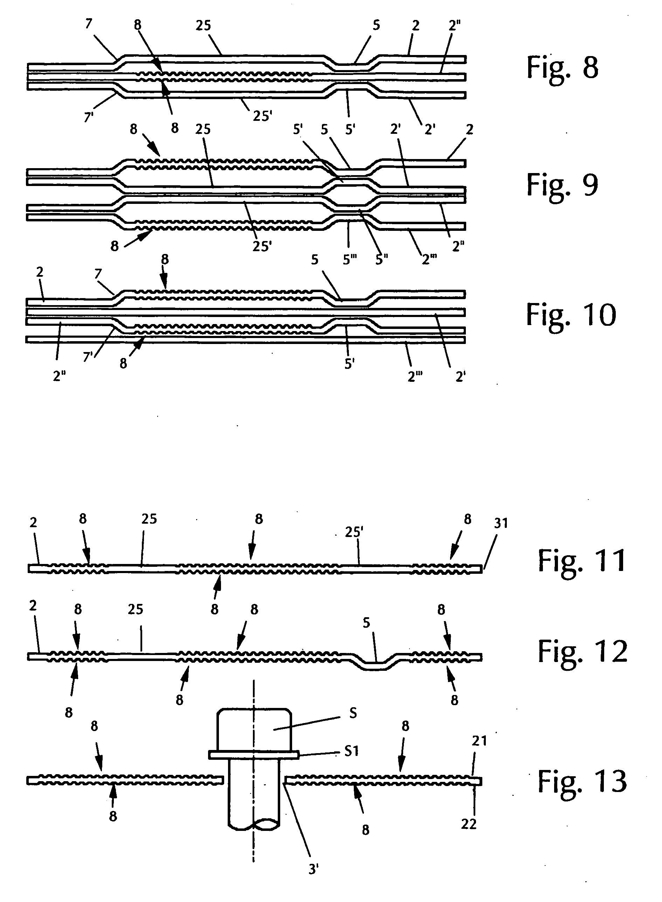

Die Fig. 8 zeigt eine dreilagige Zylinderkopfdichtung in einem Querschnitt entlang der Linie B - B der Fig. 1. Die in der Figur unterste Dichtungslage 2' entspricht der unteren Dichtungslage 2' in Fig. 6. Die obere Dichtungslage 2 ist zu der unteren Dichtungslage 2' spiegelbildlich angeordnet. Zwischen den Dichtungslagen 2 und 2' ist eine dritte Dichtungslage 2" angeordnet. Im Bereich zwischen den Sicken 5 und 5' sowie den Halbsicken 7 und 7' ist zu beiden Seiten der Dichtungslage 2" jeweils ein oberflächenstrukturierter Bereich 8 vorgesehen. Die oberflächenstrukturierten Bereiche 8 stehen in ihren Höhen jeweils über die benachbarte Oberfläche der Dichtungslage 2" vor und bilden einen Bereich vergrößerter Dicke. Auf diese Weise können die oberflächenstrukturierten Bereiche 8 als Verformungsbegrenzer für die Sicken 5, 5', 7 und 7' wirken.

Figur 9 stellt eine vierlagige Zylinderkopfdichtung in Teil-Querschnittsdarstellung entlang der Linie B - B in Fig. 1 dar. Die Dichtung setzt sich aus zwei spiegelbildlich aufeinander angeordneten zweilagigen Dichtungen zusammen, wie sie in Fig. 6 beschrieben wurden. Mit einer derartigen vierlagigen Dichtung können auch relativ große Dichtspalte zwischen Motorblock und Zylinderkopf abgedichtet werden.

Ein anderes Beispiel einer vierlagigen Zylinderkopfdichtung ist in Fig. 10 dargestellt. Zur Erhöhung der Gesamtdicke der Dichtung sind zwei Distanzlagen in der Dichtung angeordnet, die lediglich zur Dickenvergrößerung beitragen, selbst aber keine Dichtelemente oder oberflächenstrukturierten Bereiche aufweisen. Eine erste Distanzlage 2' ist zwischen zwei spiegelbildlich zueinander angeordneten Dichtungslagen 2 und 2" eingeschoben. Diese beiden Dichtungslagen entsprechend den Dichtungslagen 2 und 2' der Dichtung gemäß Fig. 7. Die zweite Distanzlage 2"' ist unterhalb der Dichtungslage 2" angeordnet.

Figuren 11 bis 13 zeigen weitere Teildarstellungen einlagiger Zylinderkopfdichtungen. Figuren 11 und 12 stellen beispielsweise Ausschnitte der Dichtung zwischen zwei benachbarten Durchgangsöffnungen oder einer Durchgangsöffnung und einem Außenrand der Dichtung dar. Beide Dichtungsbereiche ähneln grundsätzlich dem Ausschnitt, der in Fig. 5 dargestellt ist. Im Unterschied zu letzterer Dichtung weist die Dichtung gemäß Fig. 11 im gezeigten Ausschnitt jedoch keine Dichtungselemente wie Sicken oder Halbsicken auf. Die oberflächenstrukturierten Bereiche 8 sind vielmehr durch glatte Abschnitte 25 und 25' voneinander getrennt.

Anstelle des glatten Bereiches 25' ist in der Dichtung gemäß Fig. 12 eine Sicke 5 vorhanden. Diese kann beispielsweise eine Durchgangsöffnung umgeben, welche sich rechts in der Figur an den gezeigten Abschnitt der Dichtungslage 2 anschließt.

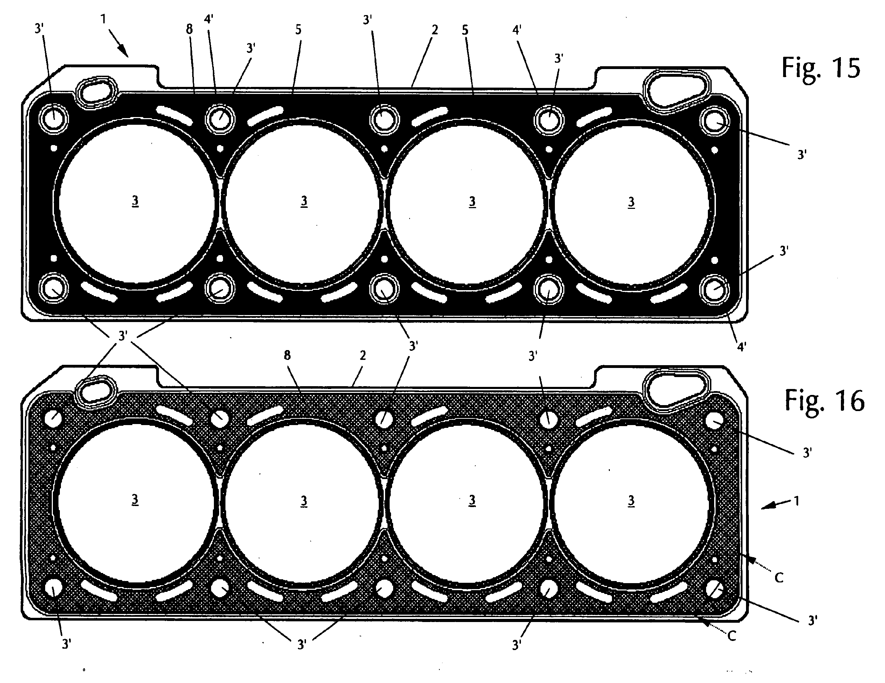

Figur 13 zeigt einen Ausschnitt aus einer erfindungsgemäßen Dichtung im Bereich einer Schraubenöffnung 3', beispielsweise einen Querschnitt entlang der Linie C - C in Fig. 16. Benachbart zur Schraubenöffnung 3' sind auf beiden Oberflächen 21 und 22 oberflächenstrukturierte Bereiche 8 vorhanden. Die Schraube S, die in die Öffnung 3' eingeführt ist, liegt im angezogenen (hier nicht gezeigten) Zustand mit dem Teller S1 ihres Schraubenkopfes auf dem oberflächenstrukturierten Bereich 8 auf. Auf diese Weise wird ein Teil der Zusammenspannkräfte in die oberflächenstrukturierten Bereiche 8 eingeleitet. Die oberflächenstrukturierten Bereiche 8 weisen aufgrund der vorhandenen Erhebungen und Vertiefungen eine größere Verformbarkeit auf als die glatte Dichtungslage 2. Bei entsprechender Auslegung von Erhebungen und Vertiefungen kann eine Regulierung der Zusammenspannkräfte im Bereich der Schraubenöffnung 3' erreicht werden.

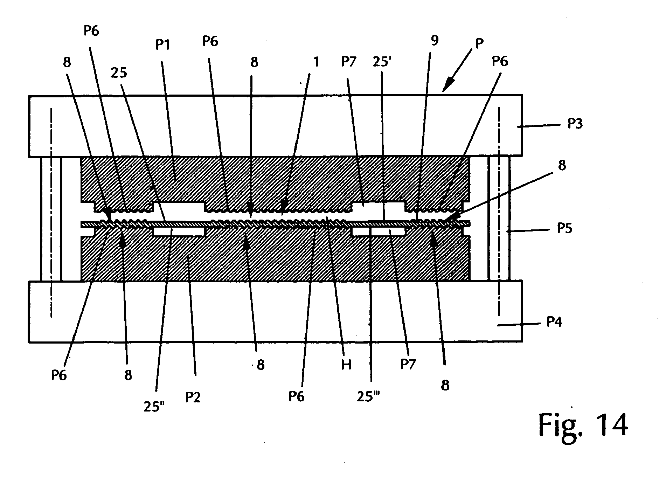

Die oberflächenstrukturierten Bereiche 8 werden bevorzugt durch Prägen in die Dichtungslagen eingebracht. Ein geeignetes Prägewerkzeug P ist schematisch in Fig. 14 gezeigt. Es dient hier zum Prägen einer Dichtungslage 2, die der in Fig. 11 dargestellten Dichtung ähnelt. Das Prägewerkzeug P umfasst zwei Prägeformen P1 und P2, deren strukturierte Prägeoberflächen aufeinander zu weisen und die einen Abstand H zwischen sich bilden, in den die Dichtung 1 eingelegt ist. Die Prägeformen P1 und P2 können mittels der Gestellbauteile P3 und P4 unter Zuhilfenahme einer Presse entlang den Führungsstiften P5 aufeinander zu und voneinander weg bewegt werden.

Zum Einprägen der Vertiefungen 9 der oberflächenstrukturierten Bereiche 8 in eine Vorform der Dichtungslage 2 weisen die Prägeformen P1 und P2 auf ihren Prägeseiten vorstehende Bereiche P6 auf, die in ihren Oberflächen Vertiefungen und Erhebungen aufweisen, die zu den Erhebungen und Vertiefungen der oberflächenstrukturierten Bereiche 8 der Dichtungslage 2 komplementär sind. Dort, wo in der Dichtungslage 2 keine oberflächenstrukturierten Bereiche 8 erzeugt werden sollen, weisen die Prägeformen P1 und P2 Ausnehmungen P7 in der Prägeoberfläche auf, sodass in diesen Bereichen die Dichtungslage 2 durch den Prägevorgang unverändert bleibt. Beim Schließen der Prägeformen P1 und P2 prägen sich die vorstehenden Bereiche P6 der Prägeformen P1 und P2 in die Oberflächen der Dichtungslage 2 ein und erzeugen dort die oberflächenstrukturierten Bereiche 8. Figur 14 zeigt das Prägewerkzeug P nach Abschluss eines Prägevorganges mit wieder voneinander entfernten Prägeformen P1 und P2.

Figuren 15 und 16 veranschaulichen weitere Beispiele erfindungsgemäßer Zylinderkopfdichtungen in Draufsicht. Beide Dichtungen ähneln derjenigen, die in Fig. 1 gezeigt ist. In der Dichtung gemäß Fig. 15 sind die Schraubenöffnungen 3' von Abdichtbereichen 4' umgeben, in denen um die Schraubenöffnungen 3' umlaufende Sicken vorhanden sind. Die Schraubenöffnungen 3' mit ihren Abdichtbereichen 4' liegen alle innerhalb des oberflächenstrukturierten Bereiches 8, der sich sehr großflächig über annähernd die gesamte freie Oberfläche der Dichtungslage 2 erstreckt, soweit sie nicht von den Abdichtbereichen 4 und 4' mit ihren zugehörigen Abdichtelementen eingenommen wird.

Die in Fig. 16 dargestellte Zylinderkopfdichtung unterscheidet sich von derjenigen der Fig. 14 lediglich dadurch, dass die Schraubenöffnungen 3' nicht von einer Sicke und insofern auch nicht von einem Abdichtbereich umgeben sind. Der oberflächenstrukturierte Bereich 8 schließt sich daher praktisch unmittelbar an die Außenränder der Schraubenöffnungen 3' an.

## Patentansprüche

1. Metallische Flachdichtung (1) mit wenigstens einer Dichtungslage (2), in der wenigstens eine Durchgangsöffnung (3) vorhanden ist, die von einem Abdichtbereich (4) umgeben ist, in dem wenigstens ein die Durchgangsöffnung (3) einschließendes elastisch verformbares Dichtelement (5) angeordnet ist, und die gegebenenfalls wenigstens einen Funktionsbereich (6) mit wenigstens einem elastisch verformbaren Dicht- oder Stützelement (7) aufweist, das nicht um eine einzelne Durchgangsöffnung herum verläuft, und worin außerhalb des wenigstens einen Abdichtbereiches (4) und gegebenenfalls des wenigstens einen Funktionsbereiches (6) auf wenigstens einer der Oberflächen (21, 22) einer der Dichtungslagen (2) ein mit einer Oberflächenstrukturierung versehener Bereich (8) vorhanden ist, derart, dass die Dichtungslage in diesem Bereich (8) eine größere Dicke (D1) als die originäre Dicke (D2) der Dichtungslage (2) aufweist,
**dadurch gekennzeichnet,**
**dass** der mit der Oberflächenstrukturierung versehene Bereich (8) die wenigstens eine Oberfläche (21) außerhalb des wenigstens einen Abdichtbereiches (4) und gegebenenfalls des wenigstens einen Funktionsbereiches (6) im Wesentlichen vollständig bedeckt und die Oberflächenstrukturierung von sich abwechselnden Vertiefungen (9) und Erhebungen (10) gebildet wird, die auf wenigstens einer Schar im Wesentlichen parallel über die Gesamtausdehnung des oberflächenstrukturierten Bereiches (8) verlaufender virtueller gerader Linien angeordnet sind.

2. Metallische Flachdichtung gemäß Anspruch 1,
**dadurch gekennzeichnet,**
**dass** Vertiefungen (9) und Erhebungen (10) sich in der Erstreckungsrichtung der Linien abwechseln.

3. Metallische Flachdichtung gemäß Anspruch 2,
**dadurch gekennzeichnet,**
**dass** die Vertiefungen (9) und Erhebungen (10) auf zueinander benachbarten Linien jeweils versetzt zueinander angeordnet sind.

4. Metallische Flachdichtung gemäß Anspruch 1,
**dadurch gekennzeichnet,**
**dass** die Oberflächenstrukturierung aus wellenartig parallel zueinander verlaufenden Vertiefungen (9) mit dazwischen liegenden erhöhten Rippen (10) gebildet wird.

5. Metallische Flachdichtung nach einem der Ansprüche 1 bis 3,
**dadurch gekennzeichnet,**
**dass** die Oberflächenstrukturierung Vertiefungen (9) aufweist, die entlang mindestens zweier sich schneidender Scharen virtueller gerader Linien verlaufen.

6. Metallische Flachdichtung nach Anspruch 5,
**dadurch gekennzeichnet,**
**dass** die sich schneidenden Linien in einem Winkel von 30 bis 150°, bevorzugt 45 bis 135 °, besonders bevorzugt 80 bis 100 ° und insbesondere 90 ° zueinander verlaufen.

7. Metallische Flachdichtung nach Anspruch 5,
**dadurch gekennzeichnet,**
**dass** die Vertiefungen (9) auf drei Scharen virtueller gerader Linien verlaufen, die sich bevorzugt in einem Winkel von 60 ° schneiden.

8. Metallische Flachdichtung nach einem der vorhergehenden Ansprüche,
**dadurch gekennzeichnet,**
**dass** die Vertiefungen (9) einen trapezförmigen, dreieckigen, gerundeten oder rechteckigen Querschnitt aufweisen.

9. Metallische Flachdichtung nach einem der vorhergehenden Ansprüche,
**dadurch gekennzeichnet,**
**dass** die Erhebungen (10) ein kuppenförmiges, rechteckiges, dreieckiges oder trapezförmiges Querschnittsprofil aufweisen.

10. Metallische Flachdichtung gemäß Anspruch 5 oder 6,
**dadurch gekennzeichnet,**
**dass** die Erhebungen (10) die Form eines Polyederstumpfes aufweisen.

11. Metallische Flachdichtung nach einem der vorhergehenden Ansprüche,
**dadurch gekennzeichnet,**
**dass** die Höhe der Erhebungen (10) und/oder die Tiefe der Vertiefungen (9) sich über den oberflächenstrukturierten Bereich (8) ändert.

12. Metallische Flachdichtung nach Anspruch 11,
**dadurch gekennzeichnet,**
**dass** sich in Nachbarschaft zu einer Durchgangsöffnung (3), insbesondere einer Brennraumöffnung einer Zylinderkopfdichtung, die Höhe der Erhebungen (10) in Umfangsrichtung um die Durchgangsöffnung (3) ändert.

13. Metallische Flachdichtung nach Anspruch 11,
**dadurch gekennzeichnet,**
**dass** die Höhe der Erhebungen (10) im Bereich des Außenrandes (23) der Dichtungslage (2) und insbesondere im Bereich der schmalseitigen Außenrandabschnitte (24) sich ändert.

14. Metallische Flachdichtung nach einem der vorhergehenden Ansprüche,
**dadurch gekennzeichnet,**
**dass** die Oberflächenstruktur in der selben Dichtungslage (2) wie der wenigstens eine Abdichtbereich (4) ausgebildet ist.

15. Metallische Flachdichtung nach einem der Ansprüche 1 bis 13,
**dadurch gekennzeichnet,**
**dass** sie wenigstens zwei Dichtungslagen aufweist, wobei der wenigstens eine Abdichtbereich (4) in einer anderen Dichtungslage ausgebildet ist als der oberflächenstrukturierte Bereich (8).

16. Metallische Flachdichtung nach einem der vorhergehenden Ansprüche,
**dadurch gekennzeichnet,**
**dass** ein oberflächenstrukturierter Bereich (8) auf beiden Oberflächen (21, 22) der Dichtungslage (2) vorhanden ist.

17. Metallische Flachdichtung nach einem der vorhergehenden Ansprüche,
**dadurch gekennzeichnet,**
**dass** der oberflächenstrukturierter Bereich (8) sich den wenigstens einen Abdichtbereich (4) abschließt mit einem Abstand von 0,3 mm bis 3 mm, bevorzugt 0,5 mm bis 2 mm, besonders bevorzugt von 0,5 mm bis 1,5 mm.

## Claims

1. Metallic flat gasket (1) with at least one gasket layer (2), in which at least one through opening (3) is present, which is surrounded by a sealing area (4), in which at least one elastically deformable sealing element (5) surrounding the through opening (3) is arranged, and an optional at least one functional area (6) with at least one elastically deformable sealing or supporting element (7), which does not separately surround a single though-opening, where outside of the at least one sealing area (4) and the optional at least one functional area (6) on at least one of the surfaces (21, 22) of at least one of the gasket layers (2) an area (8) is surface structured in such a way that the gasket layer (2) in this area (8) has a thickness (D1) that is larger than the original thickness of the gasket layer (2),
**characterized in that**
the surface structured area (8) essentially completely covers the at least one surface (21) outside of the at least one sealing area (4) and the optional at least one functional area (6) and the surface structure is formed by alternating depressions (9) and protrusions (10) which run on at least one cohort of essentially parallel, straight virtual lines extending over the total area of the structured area (8).

2. Metallic flat gasket according to claim 1,
**characterized in that**
depressions (9) and protrusions (10) alternate in the extension direction of the virtual straight lines.

3. Metallic flat gasket according to claim 2,
**characterized in that**
the depressions (9) and the protrusions (10) are arranged in a staggered manner on adjoining lines.

4. Metallic flat gasket according to claim 1,
**characterized in that**
the surface structuring is formed in an undulating manner from depressions (9) running in parallel to each other with intermediate elevated ribs (10)

5. Metallic flat gasket according to any one of claims 1 to 3,
**characterized in that**
the surface-structuring comprises depressions (9), which run along at least two intersecting cohorts of virtual straight lines.

6. Metallic flat gasket according to claim 5,
**characterized in that**
the intersecting lines run at an angle of 30 to 150°, preferably 45 to 135°, more preferably 80 to 100° and especially 90° with respect to each other.

7. Metallic flat gasket according to claim 5,
**characterized in that**
the depressions (9) run along three intersecting cohorts of virtual straight lines, which preferably intersect at an angle of 60°.

8. Metallic flat gasket according to any one of the preceding claims,
**characterized in that**
the depressions (9) show a trapezoidal, triangular, rounded or rectangular cross section.

9. Metallic flat gasket according to any one of the preceding claims,
**characterized in that**
the protrusions (10) have a cap-shaped, rectangular, triangular or trapezoidal cross section.

10. Metallic flat gasket according to claim 5 or 6,
**characterized in that**
the protrusions (10) are in the form of a polyhedron stump.

11. Metallic flat gasket according to any one of the preceding claims,
**characterized in that**
the height of the protrusions (10) and/or the depth of the depressions (9) alternates over the surface-structured area (8).

12. Metallic flat gasket according to claim 11,
**characterized in that**
in the surroundings of a through opening (3), especially a combustion gas through opening of a cylinder head gasket, the height of the protrusions (10) alternates in the circumferential direction around the through opening (3).

13. Metallic flat gasket according to claim 11,
**characterized in that**
the height of the protrusions (10) alternates in the area of the outer edge (23) of the gasket layer (2) and especially in the area of the shorter edge (24).

14. Metallic flat gasket according to any one of the preceding claims,
**characterized in that**
the surface-structuring is formed in the same gasket layer (2) as the at least one sealing area (4).

15. Metallic flat gasket according to any one of claims 1 to 13,
**characterized in that**
it comprises at least two gasket layers, the at least one sealing area (4) being formed in a different layer than the surface-structured area (8).

16. Metallic flat gasket according to any one of the preceding claims,
**characterized in that**
a surface-structured area (8) is present on both surfaces (21, 22) of the gasket layer (2).

17. Metallic flat gasket according to any one of the preceding claims,
**characterized in that**
the surface-structured area (8) adjoins the at least one sealing area (4) at a distance of 0.3 to 3 mm, preferably 0.5 to 2 mm and most preferably 0.5 to 1.5 mm.

## Revendications

1. Joint plat métallique (1) avec au moins une tôle de joint (2) dans laquelle est formée au moins une ouverture de passage (3), qui est entourée par une zone d'étanchéité (4) dans laquelle est disposé au moins un élément d'étanchéité (5) déformable de façon élastique renfermant l'ouverture de passage (3) et qui présente éventuellement au moins une zone fonctionnelle (6) avec au moins un élément d'étanchéité et d'appui (7) déformable de façon élastique qui ne passe pas sur le tour d'une seule ouverture de passage, et dans laquelle il existe en dehors de l'au moins une zone d'étanchéité (4) et éventuellement de l'au moins une zone fonctionnelle (6) sur au moins une des surfaces (21, 22) de l'une des tôles de joint (2) une zone à surface structurée (8), de telle sorte que la tôle de joint présente dans cette zone (8) une plus grande épaisseur (D1) que l'épaisseur d'origine (D2) de la tôle de joint (2),
**caractérisé en ce que**
la zone à surface structurée (8) couvre essentiellement complètement l'au moins une surface (21) en dehors de l'au moins une zone d'étanchéité (4) et le cas échéant de l'au moins une zone fonctionnelle (6) et la structure de surface est formée de dépressions (9) et de saillies (10) alternés qui sont disposés au moins sur un groupe de lignes droites virtuelles qui courent de façon sensiblement parallèle sur toute l'étendue de la zone à surface structurée (8).

2. Joint plat métallique selon la revendication 1,
**caractérisé en ce que**
des dépressions (9) et des saillies (10) alternent dans le sens de l'étendue des lignes.

3. Joint plat métallique selon la revendication 2,
**caractérisé en ce que**
les dépressions (9) et les saillies (10) sont décalés les uns par rapport aux autres sur des lignes voisines.

4. Joint plat métallique selon la revendication 1,
**caractérisé en ce que**
la structure de surface est formée de dépressions (9) parallèles les uns aux autres sur un tracé ondulé avec des nervures (10) surélevées entre eux.

5. Joint plat métallique selon l'une des revendications 1 à 3,
**caractérisé en ce que**
la structure de surface présente des dépressions (9) qui s'étendent le long d'au moins deux groupes de lignes droites virtuelles qui se coupent.

6. Joint plat métallique selon la revendication 5,
**caractérisé en ce que**
les lignes qui se coupent forment les unes par rapport aux autres un angle de 30 à 150°, de préférence de 45 à 135°, en particulier de 80° à 100° et particulièrement de 90°.

7. Joint plat métallique selon la revendication 5,
**caractérisé en ce que**
les dépressions (9) s'étendent sur trois groupes de lignes droites virtuelles qui se coupent de préférence selon un angle de 60°.

8. Joint plat métallique selon l'une des revendications précédentes,
**caractérisé en ce que**
les dépressions (9) ont une section trapézoïdale, triangulaire, arrondie ou rectangulaire.

9. Joint plat métallique selon l'une des revendications précédentes,
**caractérisé en ce que**
les saillies (10) ont un profil en section en forme de coupole, rectangulaire, triangulaire ou trapézoïdal.

10. Joint plat métallique selon la revendication 5 ou 6,
**caractérisé en ce que**
les saillies (10) sont en forme de polyèdre tronqué.

11. Joint plat métallique selon l'une des revendications précédentes,
**caractérisé en ce que**
la hauteur des saillies (10) et/ou la profondeur des dépressions (9) change dans la zone à surface structurée (8).

12. Joint plat métallique selon la revendication 11,
**caractérisé en ce que**
au voisinage d'une ouverture de passage (3), en particulier d'une ouverture de chambre de combustion d'un joint de culasse, la hauteur des saillies (10) change dans le sens de la circonférence autour de l'ouverture de passage (3).

13. Joint plat métallique selon la revendication 11,
**caractérisé en ce que**
la hauteur des saillies (10) change au niveau du bord extérieur (23) de la tôle de joint (2) et en particulier au niveau des parties de bord extérieur du côté étroit (24).

14. Joint plat métallique selon l'une des revendications précédentes,
**caractérisé en ce que**
la structure de surface est formée dans la même tôle de joint (2) que l'au moins une zone d'étanchéité (4).

15. Joint plat métallique selon l'une des revendications 1 à 13,
**caractérisé en ce que**
il présente au moins deux tôles de joint, l'au moins une zone d'étanchéité (4) étant formée dans une autre tôle de joint que la zone à surface structurée (8).

16. Joint plat métallique selon l'une des revendications précédentes,
**caractérisé en ce que**
il y a une zone à surface structurée (8) sur les deux surfaces (21, 22) de la tôle de joint (2).

17. Joint plat métallique selon l'une des revendications précédentes,
**caractérisé en ce que**
la zone à surface structurée (8) fait suite à l'au moins une zone d'étanchéité (4) à une distance de 0,3 mm à 3 mm, de préférence de 0,5 mm à 2 mm, en particulier de 0,5 mm à 1,5 mm.
